(19) Europäisches Patentamt
European Patent Office
Office européen des brevets

(11) **EP 3 015 597 B1**

(12) **EUROPEAN PATENT SPECIFICATION**

(45) Date of publication and mention
of the grant of the patent:
**05.09.2018 Bulletin 2018/36**

(51) Int Cl.:
***D06M 15/55*** *(2006.01)*      ***D06M 15/41*** *(2006.01)*
***D06M 15/693*** *(2006.01)*      ***D06M 101/36*** *(2006.01)*
***F16G 1/10*** *(2006.01)*      ***F16G 5/08*** *(2006.01)*

(21) Application number: **14816621.8**

(22) Date of filing: **25.06.2014**

(86) International application number:
**PCT/JP2014/066898**

(87) International publication number:
**WO 2014/208625 (31.12.2014 Gazette 2014/53)**

(54) **ARAMID CORE WIRE, METHOD FOR MANUFACTURING SAME, TREATMENT AGENT, AND TRANSMISSION BELT**

ARAMIDKERNDRAHT, VERFAHREN ZUR HERSTELLUNG DAVON, BEHANDLUNGSMITTEL UND ÜBERTRAGUNGSGURT

FIL À ÂME EN ARAMIDE, PROCÉDÉ DE FABRICATION DE CELUI-CI, AGENT DE TRAITEMENT, ET COURROIE DE TRANSMISSION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.06.2013 JP 2013134663**
**05.06.2014 JP 2014116729**

(43) Date of publication of application:
**04.05.2016 Bulletin 2016/18**

(73) Proprietor: **Mitsuboshi Belting Ltd.**
**Kobe-shi, Hyogo 653-0024 (JP)**

(72) Inventors:
• **MATSUMOTO Hideyuki**
**Kobe-shi**
**Hyogo 653-0024 (JP)**
• **NISHIMURA Toshihiro**
**Kobe-shi**
**Hyogo 653-0024 (JP)**

(74) Representative: **Hoffmann Eitle**
**Patent- und Rechtsanwälte PartmbB**
**Arabellastraße 30**
**81925 München (DE)**

(56) References cited:
**JP-A- H1 135 702**      **JP-A- 2000 212 878**
**JP-A- 2001 226 879**      **JP-A- 2001 322 184**
**JP-A- 2009 019 760**      **JP-A- 2013 170 333**
**US-A1- 2006 147 711**      **US-A1- 2012 202 922**

• **DATABASE WPI Week 199916 Thomson Scientific, London, GB; AN 1999-186385 XP002766262, -& JP H11 35702 A (YOKOHAMA RUBBER CO LTD) 9 February 1999 (1999-02-09)**
• **DATABASE WPI Week 200918 Thomson Scientific, London, GB; AN 2009-E34495 XP002766263, & JP 2009 019760 A (MITSUBOSHI BELTING LTD) 29 January 2009 (2009-01-29)**

**Description**

TECHNICAL FIELD

The present invention relates to a cord for use in power transmission belts and a manufacturing method thereof, a treating agent, and a power transmission belt containing the cord.

BACKGROUND ART

There are various power transmission belts having a variety of forms and typical of them are those provided with vulcanized rubber layers in which a cord is embedded. As the cord, glass cord, polyester cord, aramid cord and the like have been used for general purposes. Among all, aramid cord is most excellent in respect of compatibility between high strength and elasticity.

Even such aramid cord is, however, rigid as compared with polyester cord or the like, and tends to cause a fray out of the cord from a vulcanized rubber layer. Such a fray occurs not only at cut surfaces of a belt but also occurs by protrusion of the cord or single yarn constituting the cord during the belt running. Under these circumstances, there has been proposed a method for preventing cords from fraying out.

Patent Document 1 discloses an adhesion treatment method of a cord for a power transmission belt, in which in an adhesion treatment method of a cord for a power transmission belt with a hydrogenated nitrile rubber compound, a cord for a power transmission belt containing a twisted cord (e.g., a twisted cord made by twisting filaments of poly-p-phenylenebenzobisoxazole fibers or aramid fibers) is subjected to a treatment with a pretreating solution containing a nitrile rubber-modified epoxy resin, which is produced by modifying an epoxy resin having two or more epoxy groups per molecule with nitrile rubber, and an alkylphenol-formaldehyde resin, then subjected to a treatment with an RFL solution containing a nitrile rubber latex or a hydrogenated nitrile rubber latex, and further subjected to overcoat treatment with rubber cement prepared by dissolving a nitrile rubber compound or a hydrogenated nitrile rubber compound in a solvent.

According to the method disclosed in the above document, there may, however, be cases where bending fatigue resistance cannot be improved satisfactorily presumably because the coating of the cord becomes hard through the pretreatment with an alkylphenol-formaldehyde resin.

While the document assumed that the cord will fray out from inside of the vulcanized rubber, there are cases where the fray of the cord causes problems even before vulcanization (before forming).

For example, a wrapped V belt is obtained through a step (cutting step) of cutting (slicing) an unvulcanized rubber layer (a belt sleeve) in which a cord is embedded, into pieces of a predetermined width, a step (skiving step) of cutting off edges of lower both ends of the cut belt, a step (covering step) of winding canvas around all the periphery of the belt after the skiving step, and a step of vulcanizing the belt having undergone the covering step by applications of heat and pressure.

Because cutting is carried out before vulcanization in the case of undergoing such a series of steps, it becomes necessary to prevent or inhibit the cord from fraying out from inside the unvulcanized rubber layer. Such a fray before vulcanization may lower the workability in belt forming, and may develop a worse fray in the skiving step. Accordingly, there may be cases where it is necessary to conduct another step for cutting off the frayed portions, which threatens to incur further complication in belt forming. In addition, such a frayed cord may become a contribution factor to low adhesion between canvas and the rubber layer (the main body of a belt).

Patent Document 2 describes a manufacturing method of an aramid cord with a composition comprising an unmodified epoxy resin and a modified styrene-butadiene copolymer rubber latex. Further, Patent Document 3 discloses a composition for treating an aramid cord including bisphenol-based liquid epoxy resins, a reactive diluent and a curing agent which may further include an elastomer-modified epoxy adduct. The aramid cord treated with this composition may be e.g. a power transmission belt component, a tire component or a hose component.

PRIOR ART DOCUMENT

PATENT DOCUMENT

Patent Document 1: Japanese Patent No. 3759857
Patent Document 2: JP H11 35702 A
Patent Document 3: US 2006/147711 A1

SUMMARY OF THE INVENTION

PROBLEMS THAT THE INVENTION IS TO SOLVE

An object of the present invention is to provide an aramid cord capable of efficiently achieving compatibility between fray resistance and bending fatigue resistance even when the cord is made up of aramid fibers, a manufacturing method thereof and a power transmission belt using the foregoing aramid cord(s).

Another object of the present invention is to provide an aramid cord having excellent adhesion to rubber in which the cord is to be embedded, a manufacturing method thereof and a power transmission belt using the foregoing aramid cord(s).

A further object of the present invention is to provide an aramid cord capable of efficiently inhibiting or preventing the cord from fraying out even when a cord-embedded rubber layer is in an unvulcanized state, a manufacturing method thereof and a power transmission belt using the foregoing aramid cord(s).

Still another object of the present invention is to provide a treating agent useful for obtaining the foregoing aramid cord.

A further object of the present invention is to provide a treating agent which can provide the foregoing cord even when the aramid cord is twisted yarn.

MEANS FOR SOLVING THE PROBLEMS

The present inventors have made intensive studies in order to attain the foregoing objects, and they have found that, even when a cord is made up of aramid fibers, it can be prevented or inhibited from fraying out (fraying out at cut surfaces) on a high level without impairing bending fatigue resistance (and adhesion or bonding to rubber as well) by at least treating untreated yarns to constitute the cord with a treating agent containing a rubber-modified epoxy resin and a rubber-unmodified epoxy resin (a rubber-free epoxy resin, an epoxy resin having undergone no modification with rubber), wherein the rubber-modified epoxy resin comprises a nitrile rubber-modified bisphenol-type epoxy resin, and the rubber-unmodified epoxy resin comprises a bisphenol F-type epoxy resin and a bisphenol A-type epoxy resin, thereby completing the present invention.

That is, the method according to the present invention is a manufacturing method of an aramid cord, containing at least a first treatment step of treating (covering treatment, immersion treatment or impregnation treatment) an untreated yarn for the aramid cord with a first treating agent.

The first treatment agentcontains a rubber-modified epoxy resin and a rubber-unmodified epoxy resin, wherein the rubber-modified epoxy resin comprises a nitrile rubber-modified bisphenol-type epoxy resin, and the rubber-unmodified epoxy resin comprises a bisphenol F-type epoxy resin and a bisphenol A-type epoxy resin.

In such the first treating agent containing bisphenol F-type epoxy resins and another bisphenol-type epoxy resin, the ratio between the bisphenol F-type epoxy resins and the other bisphenol-type epoxy resin, a former/latter (mass ratio), may be from 95/5 to 10/90.

In the first treating agent, the ratio between the rubber-modified epoxy resin and the rubber-unmodified epoxy resin, a former/latter (mass ratio), may be, for example, from 50/50 to 1/99.

The method according to the present invention may further contain a second treatment step of treating the first treated yarn for the aramid cord treated with the first treating agent, with a second treating agent containing resorcinol, formalin and a latex.

In such the second treating agent, the rubber constituting the latex may be constituted of the same or the same-type rubber in which the cord is embedded.

The method according to the present invention may further contain a third treatment step of treating the second treated yarns for the aramid cord having undergone treatment in the second treatment step, with a third treating agent containing a rubber.

In the method according to the present invention, the untreated yarn for the aramid cord may be twisted yarn.

The present invention includes an aramid cord obtained by the above-described method. The present invention also includes a power transmission belt provided with a rubber layer in which the above-described aramid cord is embedded along the lengthwise direction of the belt. Such the power transmission belt may be, for example, a power transmission belt containing an adhesion rubber layer and a compression rubber layer provided on one surface of the adhesion rubber layer in which the aramid cord is embedded in the adhesion rubber layer.

In particular, the power transmission belt of the present invention may be a wrapped V-belt, a raw edge V-belt or a raw edge cogged V-belt. Among these belts, the wrapped V-belt is formed of, for example, a rubber layer (or a belt main body constituted of the rubber layer) in which the aramid cord is embedded along the lengthwise direction of the belt, and a reinforcing cloth covering all the periphery of the rubber layer (or the belt main body constituted of the rubber layer).

The present invention also includes the above-described first treating agent, that is, a treating agent for treating an untreated yarn for an aramid cord (or an aramid cord) to be used in a power transmission belt, containing a rubber-modified epoxy resin and an aromatic epoxy resin, wherein the rubber-modified epoxy resin comprises a nitrile rubber-modified bisphenol-type epoxy resin, and the rubber-unmodified epoxy resin comprises a bisphenol F-type epoxy resin and a bisphenol A-type epoxy resin.

In the present specification, in regard to the untreated yarn for an aramid cord, the term "raw yarn" refers to monofilament yarns of aramid fibers or single yarns, namely aramid-based multifilament yarns obtained by arranging a group of filaments including aramid fibers in parallel into the shape of a ribbon (or a tape) without twisting (wherein a group of multifilament fibers confounded or bound together is included). And the term "twisted yarn" refers to yarns made by twisting the raw yarn.

ADVANTAGE OF THE INVENTION

Since the specific treating agent is use, the aramid cord of the present invention, even when the cord is made up of aramid fibers, can ensure compatibility between fray resistance and bending fatigue resistance in power transmission belts. In addition, the cord is also superior in property of adhering (or bonding) to a rubber in which it is to be embedded. Therefore, the present invention can achieve a good balance between the bending fatigue resistance, the adhesion to rubber and the fray resistance, which are properties to which compatibility is hard to impart, and the aramid cord obtained according to the present invention is extremely useful as a cord for use in power transmission belts.

Further, thanks to such the specific treating agent, in the present invention, it can efficiently inhibit or prevent of a fray of the cord even when the rubber layer in which the cord is embedded is in an unvulcanized state. For this reason, in power transmission belts manufactured through the step of cutting in an unvulcanized state of their rubber layers in which cords are embedded, such as wrapped V-belts, it is possible to ensure excellent forming workability without impairing belt performance.

BRIEF DESCRIPTION OF DRAWINGS

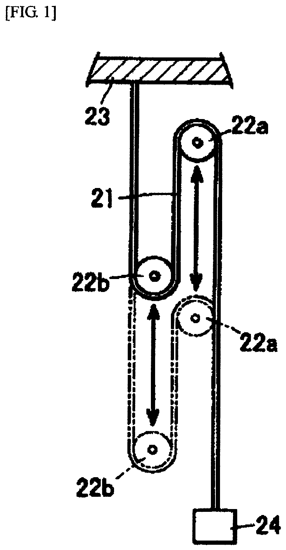

[FIG. 1] FIG. 1 is a schematic diagram illustrating a testing machine for evaluation of bending fatigue of each of test specimens obtained in Examples and Comparative Examples.

MODE FOR CARRYING OUT THE INVENTION

(Manufacturing Method of Cord)

The cord of the present invention is manufactured through at least a step (first treatment step) of treating (covering treatment, immersion treatment or impregnation treatment) of an untreated yarn (cord body) for an aramid cord with a specified first treating agent.

First Treatment Step

(Untreated Yarn for Aramid Cord)

Untreated yarns for an aramid cord, which are to be treated with the first treating agent, may be either in a state of untwisted raw yarns or in a state of twisted yarns made of twisting raw yarns. Because the twisted yarns are formed by twisting filaments together, it has a property of defying intrusion of a treating agent into internal filaments thereof. Accordingly, the treating agent usually fails to firmly adhere to internal filaments, and hence the twisted yarn tends to have poor adhesion to rubber. On the other hand, there is a method of forming twisted yarns by twisting raw yarns after treated with a treating agent, and further treating the twisted ones with the treating agent. This method allows improvements in fraying property and adhesiveness, but flexibility of aramid fibers is impaired and bending fatigue resistance tends to become low. Additionally, because treatment steps are necessarily provided before and after the twisting, the process becomes complicated, and besides, adhesion of the treating agent to raw yarns causes an increase in tackiness, and thereby handling capability during the twisting operation is also degraded. In contrast to the above method, in the invention, presumably because the treating agent is superior in permeability, adhesion to a rubber can be improved even in the case of twisted yarns. Thus, the present invention can achieve excellent effects regardless of whether the untreated yarns for an aramid cord are raw yarns or twisted yarns, and is especially effective in the case of using a twisted yarn.

(Raw Yarns)

Examples of raw yarns for an aramid cord include monofilament yarns of aramid fibers (aromatic polyamide fibers) and aramid-based multifilament yarns obtained by arranging a group of multifilaments including aramid fibers in parallel into the shape of a ribbon (or a tape) without twisting.

Examples of such aramid fibers include para-aramid fibers and meta-aramid fibers. Examples of para-aramid fibers include poly(paraphenylene terephtalamide) fibers (e.g. Twaron®, registered trademark, of Teijin Limited; Kevlar®, registered trademark, of DuPont-Toray Co., Ltd.) and fibers of copolymer of poly paraphenylene terephtalamide and 3,4'-oxydiphenylene terephtalamide (e.g. Technora®, registered trademark, of Teijin Limited). Examples of meta-aramid fibers include poly(metaphenylene isophthalamide) fibers (e.g. Conex®, registered trademark, of Teijin Limited). These aramid fibers can be used singly or in combination of two or more thereof. Of these aramid fibers, para-aramid fibers are preferred because they have high modulus properties.

From the viewpoint of strength and the like, usually, the cord is formed with twisted yarn made of a plurality of raw yarns twisted together, and the raw yarns are also prepared in the form of aramid-based multifilament yarns. In the raw yarns, it is essential only that aramid-based multifilament yarns contain monofilament yarns of aramid fibers, and thereinto, if required, may be incorporated monofilament yarns of other fibers (e.g. polyester fibers). In the present invention, because untreated yarns are treated with the specific first treating agent, even in the case of an untreated yarn being a multifilament yarn of aramid fibers (a multifilament yarn consisting of monofilament yarns of aramid fiber), it can prevent from fraying out on a side face of a power transmission belt and a bending fatigue resistance of the power transmission belt can be improved.

It is only essential that an aramid-based multifilament yarn contains a plurality of monofilament yarns, and in viewpoint of the durability of power transmission belts, it may contain monofilament yarns of, for example, the order of from 100 to 5,000 pieces, preferably from 500 to 4,000 pieces, and still preferably from 1,000 to 3,000 pieces.

The average denier of monofilament yarns may be, for example, of the order of from 1 to 10 dtex, preferably from 1.2 to 8 dtex, and still preferably from 1.5 to 5 dtex.

The aramid-based multifilament yarn may be used without converging monofilament yarns thereof (e.g. in a state of arranging monofilament yarns in parallel to form into the shape of a ribbon without twisting), or it may be used in a state that a plurality of monofilament yarns are converged by the use of a converging means (e.g. confounding or binding). In the present invention, even when an aramid-based multifilament yarn is in the converged state, it is capable of ensuring compatibility between fray resistance and bending fatigue resistance in the aramid cord. As described above, since it is possible in the present invention to converge raw yarns for the aramid cord in advance, even when a plurality of treating agents are used, the treatments can be performed sequentially, which conduces to excellent productivity.

(Twisted Yarn)

Twisted yarn (or cord) obtained by twisting such raw yarns as mentioned above may be single-direction twisted yarn made by using a single yarn made up of a plurality of monofilament yarns and giving clockwise twists (S twists) or counterclockwise twists (Z twists) to at least one single yarn. In view point of strength, the single yarn may contain monofilament yarns of the order of, for example, from 10 to 2,000 pieces, preferably from 100 to 1,800 pieces, and still preferably from 500 to 1,500 pieces. The average denier of single yarns may be, for example, on the order of from 500 to 3,000 dtex, preferably from 1,000 to 2,500 dtex, and still preferably from 1,500 to 2,000 dtex.

In many cases, the single-direction twisted yarn contains single yarns of the order of usually from 1 to 6 pieces, preferably from 1 to 4 pieces, and still preferably from 1 to 3 pieces (e.g. 1 or 2 pieces). Incidentally, in the case where the single-direction twisted yarn contains a plurality of single yarns, there are many cases where the plurality of single yarns are tied together (arranged in parallel) and thereto twists are given.

The single-direction twisted yarn may be, for example, soft twisted yarn or medium twisted yarn (particularly soft twisted yarn).

The twist number for single-direction twisted yarn may be, for example, on the order of from 20 to 200 turns/m (e.g. from 20 to 180 turns/m), preferably from 20 to 150 turns/m (e.g. from 25 to 120 turns/m), and still preferably from 30 to 120 turns/m (e.g. from 30 to 110 turns/m). In the single-direction twisted yarn, the twist factor (T.F.) represented by the following expression (1) may be on the order of, for example, from 0.01 to 3, and preferably from 0.1 to 2.

$$\text{Twist factor (T.F.)} = [\text{Twist number (turns/m)} \times \sqrt{\text{Total denier (tex)}}]/960 \qquad (1)$$

From the viewpoint of further increasing its strength, the twisted yarn may be a yarn (e.g., an organzine (piled yarn), Koma twist yarn or Lang lay yarn) which is made by using a plurality of single-direction twisted yarns as primary twisted yarn and by giving final twists thereto, or it may be twisted yarn (e.g., corkscrew yarn) which is made by using a single-direction twisted yarn and a single yarn as primary twisted yarns and by giving final twists thereto. The number of pieces of primary twisted yarn constituting such twisted yarn may be on the order of, for example, from 2 to 5, preferably from 2 to 4, and still preferably 2 or 3. The direction of single-direction twisting (primary twisting direction) may be the same as (Lang twisting) or reverse to the direction of final twisting.

The twist number in final twisting, though not particularly limited, may be on the order of, for example, from 30 to 200 turns/m, preferably from 40 to 180 turns/m, and still preferably from 50 to 150 turns/m (especially from 80 to 120 turns/m). In the final twisting, the twisting factor (T.F.) represented by the expression (1) may be on the order of, for example, from 0.5 to 6.5, preferably from 0.8 to 5, and still preferably from 1 to 4.

The average diameter of untreated yarns for an aramid cord which have undergone final twisting may be on the order of, for example, from 0.2 to 3.5 mm, preferably from 0.4 to 3 mm, and still preferably from 0.5 to 2.5 mm.

(First Treating Agent)

The first treating agent (or pretreating agent) contains a rubber-modified epoxy resin and a rubber-unmodified epoxy resin (an epoxy resin having undergone no modification with rubber, or a rubber-free epoxy resin).

The rubber-modified epoxy resin is an epoxy resin modified with a rubber produced by modifying a rubber with epoxy resin-originated epoxy groups.

As the rubber serving as a base for the rubber-modified epoxy resin, NBR (copolymer of butadiene and acrylonitrile) is used in viewpoint of adhesion to a rubber to which the aramid cord is to be embedded.

As the epoxy resin serving as a base for the rubber-modified epoxy resin, bisphenol-type epoxy resins (products of reaction between bisphenols or alkylene oxide adducts thereof) are used.

Examples of bisphenols used in the bisphenol-type epoxy resins include biphenols (4,4'-dihydroxybiphenyl, etc.), bis(hydroxyphenyl)alkanes [e.g., bis(hydroxyphenyl)$C_{1-10}$ alkanes such as bis(4-hydroxyphenyl)methane (bisphenol F), 1,1-bis(4-hydroxyphenyl)ethane, 2,2-bis(4-hydroxyphenyl)propane (bisphenol A), 2,2-bis(4-hydroxy-3-methylphenyl)propane, 2,2-bis(4-hydroxyphenyl)butane, 2,2-bis(4-hydroxyphenyl)octane, 2,2-bis(3,5-dimethyl-4-hydroxyphenyl)propane, 2,2-bis(3-cyclohexyl-4-hydroxyphenyl)propane, bis(4-hydroxyphenyl)diphenylmethane, 2,2-bis(3,5-dichloro-4-hydroxyphenyl)propane, and 2,2-bis(3,5-dibromo-4-hydroxyphenyl)propane], bis(hydroxyphenyl)cycloalkanes (e.g., 1,1-bis(4-hydroxyphenyl)cyclohexane and 1,1-bis(4-hydroxyphenyl)-3,3,5-trimethylcyclohexane), bis(hydroxyphenyl) ethers (e.g., 4,4'-dihydroxydiphenyl ether), bis(hydroxyphenyl) sulfones (e.g., 4,4'-dihydroydiphenyl sulfone), bis(hydroxyphenyl) sulfoxides (e.g., 4,4'-dihydroxydiphenyl sulfoxide), bis(hydroxyphenyl) sulfides (e.g., 4,4'-dihydroxydiphenyl sulfide), and the like.

Epoxy resins may be used singly or in combination of two or more thereof.

Bisphenol A-type epoxy resins are used presumably because the bisphenol-type epoxy resins containing bis(hydroxyphenyl)methanes such as bisphenol F-type epoxy resins as bisphenols, are capable of lowering the viscosity of the treating solution and enhancing permeability of the treating agent, the treating agent can permeate among internal filaments even when the untreated yarns for the aramid cord are twisted yarns, and thereby it becomes possible to enhance effects of improving the fray and adhesion to a rubber.

Rubber-modified epoxy resins may be used singly or in combination of two or more thereof.

The rubber-modified epoxy resin may usually have two or more epoxy groups per molecule.

The epoxy equivalent of such an rubber-modified epoxy resin, depending on the type of the epoxy resin, may be, for example, from 100 to 1,000 g/eq, preferably from 120 to 800 g/eq, still preferably from 150 to 600 g/eq, and especially from 200 to 500 g/eq.

The molecular weight of the rubber-modified epoxy resin (average molecular weight (mass-average, weight-average or like molecular weight) in the case of polymer type) is no particularly limited, and can be chosen from a range of, for example, about 300 to about 3,000.

In the present invention, the weight-average molecular weight may be measured by gel permeation chromatography (GPC) in terms of polystyrene.

Examples of commercially available rubber (NBR)-modified epoxy resin include EPR-4030 (manufactured by ADEKA CORPORATION), EPR-4033 (manufactured by ADEKA CORPORATION) and EPB-13 (manufactured by NIPPON SODA CO., LTD.).

The rubber-modified epoxy resin (NBR-modified epoxy resin) enhances the flexibility of adhesive-treated cord, and inhibits an adhesive coating from being broken at the time of bending, thereby improving bending fatigue resistance. Further, it maintains convergence of filaments of the cord after cutting, which is effective as an anti-fraying measure. Because the adhesive coating becomes soft, however, the use of the rubber-modified epoxy resin alone is apt to lower the adhesion to a rubber composition as an adherend, and cannot be said that the anti-fraying measure thereby was sufficient.

With this being the situation, the present invention utilizes the rubber-modified epoxy resin and a rubber-unmodified epoxy resin in combination.

As the rubber-unmodified epoxy resin (an epoxy resin which is not modified with a rubber), use is made of bisphenol F-type epoxy resins. Presumably because epoxy resins of such a type easily permeate among filaments of a cord, their fray improving effect seems to be high.

In particular, by using bisphenol F-type epoxy resins, the fray improving effect and adhesion to a rubber can be enhanced even when the untreated yarns for the aramid cord are twisted yarns.

Further, bisphenol-type epoxy resins containing bis(hydroxyphenyl)methanes as bisphenols are combined with epoxy resins of other bisphenol types. With these combinations, fray resistance and bending fatigue resistance (and adhesion to a rubber as well) are easy to improve or enhance in still better balance.

The other epoxy resin is a bisphenol A-type epoxy resin.

When combining the bisphenol F-type epoxy resins and bisphenol A-type epoxy resins, the ratio of them, former/latter (mass ratio), may be, for example on the order of from 99/1 to 5/95 (e.g. from 95/5 to 10/90), preferably from 95/5 to 20/80 (e.g. from 93/7 to 25/75), still preferably from 90/10 to 30/70 (e.g. from 88/12 to 40/60), or it may be on the order of from 99/1 to 40/60 (e.g. from 95/5 to 50/50, preferably from 90/10 to 55/45). With the combinations in such ratios, bending fatigue resistance, adhesion to a rubber and fray resistance are easily improved in good balance. In addition, there is also a merit of allowing easy viscosity adjustment and making it easy to achieve predetermined viscosity.

The epoxy equivalent of the rubber-unmodified epoxy resins (bisphenol-type epoxy resins) may be, for example, from 80 to 1,000 g/eq, preferably from 100 to 800 g/eq, still preferably from 120 to 600 g/eq, and especially from 150 to 500 g/eq.

The molecular weight of the rubber-unmodified epoxy resin (average molecular weight (mass-average, weight-average or like molecular weight) in the case of polymer type) is not particularly limited, and it may be on the order of, for example, from 100 to 10,000, preferably from 120 to 7,000, and still preferably from 150 to 5,000. In particular, the molecular weight (average molecular weight such as mass-average or weight-average molecular weight) of bisphenol-type epoxy resins may be on the order of from 150 to 2,000 (e.g. from 180 to 1,500), preferably from 200 to 1,000, and still preferably from 250 to 700.

The rubber-unmodified epoxy resin may be either in a solid state or in a liquid state at room temperature, and in particular, may be in a liquid state (a liquid or viscous liquid).

The viscosity of the rubber-unmodified epoxy resin (bisphenol-type epoxy resins) can be chosen depending on the type of the rubber-unmodified epoxy resin, and it may be, for example, 300 mPa·s or higher (e.g., 500 to 200,000 mPa·s or higher) at 25°C. In particular, the viscosity of bisphenol F-type epoxy resins may be, at 25°C, on the order of from 500 to 30,000 mPa·s, preferably from 1,000 to 10,000 mPa·s, still preferably from 1,500 to 7,000 mPa·s, and especially from 2,000 to 5,000 mPa·s.

In the first treating agent, the ratio between the rubber-modified epoxy resin and the rubber-unmodified epoxy resin, the former/latter (mass ratio), may be, for example, on the order of from 90/10 to 0.5/99.5 (e.g. from 80/20 to 1/99), preferably from 70/30 to 2/98 (e.g. from 60/40 to 3/97), still preferably from 50/50 to 4/96, and it may usually be on the order of from 50/50 to 1/99 (e.g. from 45/55 to 2/98, preferably from 40/60 to 3/97, and still preferably from 35/65 to 5/95). With a combination in such a ratio, bending fatigue resistance and adhesion to rubber (and fray resistance as well) are easy to improve in good balance.

The first treating agent may contain a reactive diluent. It is essential only that such a diluent be an ingredient capable of lowering viscosity without impairing properties of epoxy resins, and examples thereof include low-viscosity polyglycidyl ethers (e.g. polyol polyglycidyl ethers (e.g., ethylene glycol diglycidyl ether, propylene glycol diglycidyl ether, butanediol diglycidyl ether, neopentyl glycol diglycidyl ether, 1,6-hexanediol diglycidyl ether, trimethylolpropane polyglycidyl ether, glycerin polyglycidyl ether, sorbitol polyglycidyl ether, polypropylene glycol diglycidyl ether, and the like)), monoglycidyl ethers (e.g., butyl glycidyl ether, phenyl glycidyl ether, 4-tert-butylphenyl glycidyl ether), monoglycidyl esters (e.g, tertiary carboxylic acid monoglycidyl ester), and the like. These reactive diluents may be used singly or in combination of two or more thereof. In the present invention, presumably because the viscosity of the first treating agent can be lowered by adding such a reactive diluent into the treating agent, it is possible to enhance the permeability of the treating agent into internal filaments, and thereby adhesion to a rubber can be increased even when the untreated yarns of the aramid cord are twisted yarns.

The proportion of the reactive diluent to the total 100 parts by mass of the rubber-modified epoxy resin and the rubber-unmodified epoxy resin, may be on the order of, for example, from 0.5 to 20 parts by mass to 100 parts by mass, preferably from 1 to 15 parts by mass, still preferably from 2 to 10 parts by mass (e.g. from 3 to 8 parts by mass).

The first treating agent may contain a curing agent (or a curing accelerator). The curing agent is not particularly limited so long as it is a curing agent (a curing accelerator) intended for epoxy resin use, and examples thereof includes amines (primary or secondary amines (e.g. aliphatic amines (e.g., ethylenediamine, hexamethylenediamine, diethylene triamine, triethylenetetramine, etc.), alicyclic amines (e.g., mencenediamine, isophoronediamine, bis(4-amino-3-methylcyclohexyl)methane, 3,9-bis(3-aminopropyl)-2,4,8,10-tetraoxaspiro(5.5)undecane, etc.), araliphatic polyamines (e.g.,

xylylenediamine, etc.), aromatic amines (e.g., metaphenylenediamine, diaminodiphenylmethane, etc.), etc.), tertiary amines (e.g., triethylamine, benzyldimethylamine, triethanolamine, dimethylaminoethanol, 2,4,6-tris(dimethylaminomethyl)phenol, 1,8-diazabicyclo(5.4.0)undecene-1, etc.), imidazoles (e.g. alkylimidazoles such as 2-methylimidazole, 2-phenylimidazole, 2-heptadecylimidazole, and 2-ethyl-4-methylimidazole; arylimidazoles such as 2-phenyl-imidazole and 2-phenyl-4-methylimidazole, etc.), etc.), acid anhydrides (phthalic anhydride, tetrahydromethylphthalic anhydride, hexahydrophthalic anhydride, trimellitic anhydride, methylnadic anhydride, etc.), phosphines (triphenyl phosphine, etc.), and the like. These curing agents (or curing accelerators) may be used singly or in combination of two or more thereof. Of those, in particular, tertiary amines may be preferably used.

The proportion of the curing agent (or curing accelerator) to the total 100 parts by mass of the rubber-modified epoxy resin and the rubber-unmodified epoxy resin may be on the order of, for example, from 1 to 40 parts by mass, preferably from 2 to 35 parts by mass, and still preferably from 3 to 30 parts by mass (e.g. from 5 to 20 parts by mass).

Additionally, the first treating agent may contain a solvent (a dissolving agent) as necessary. The solvent is not particularly limited, and examples thereof include hydrocarbons (e.g. aromatic hydrocarbons such as toluene and xylene), ethers (e.g. chain-type ethers such as diethyl ether, and cyclic ethers such as dioxane and tetrahydrofuran), ketones (e.g. chain-type ketones such as acetone and methyl ethyl ketone, and cyclic ketones such as cyclohexanone), esters (e.g. acetic esters such as ethyl acetate), and the like. These solvents may be used singly or as a mixture of two or more thereof.

In the first treating agent containing a solvent, the solids concentration may be on the order of, for example, from 1 to 70 mass%, preferably from 2 to 60 mass% (e.g. from 3 to 50 mass%), still preferably from 4 to 40 mass%, and especially from 5 to 30 mass%.

The method for treating the untreated yarns for an aramid cord with the first treating agent is not particularly limited, and examples thereof include spraying, application, dipping and the like. Of these treating methods, a dipping is generally used. The dipping time may be on the order of, for example, from 1 to 20 seconds, and preferably from 2 to 15 seconds.

After treated with the first treating agent, the untreated yarn for an aramid cord may be dried if necessary. The drying temperature may be on the order of, for example, from 100 to 250°C, preferably from 110 to 220°C, and still preferably from 120 to 200°C. The drying time may be on the order of, for example, from 10 seconds to 30 minutes, preferably from 30 seconds to 10 minutes, and still preferably from 1 minute to 5 minutes. Further, the drying may be performed with applying a tension on the untreated yarn for an aramid cord. The tension may be on the order of, for example, from 5 to 15 N, and preferably from 10 to 15 N. By drying with applying a tension, the treating agent gets to conform easily to the untreated yarn for an aramid cord; as a result, when the untreated yarn for an aramid cord is a twisted yarn, unevenness in twisting can be reduced and variations caused in thickness of twisted yarn due to uneven twisting can be lessened.

The adhesion rate of the first treating agent adhered to the untreated yarns for an aramid cord during the treatment with the first treating agent ((mass after treatment with first treating agent - mass before treatment with first treating agent)/mass after treatment with first treating agent × 100) may be on the order of from 0.5% to 5% by mass, preferably from 0.7% to 4% by mass, and still preferably from 1% to 3% by mass.

The average thickness of a coating formed by the first treating agent may be on the order of from 0.001 to 5 $\mu$m, preferably from 0.01 to 3 $\mu$m, and still preferably from 0.05 to 2 $\mu$m.

Second Treatment Step

The first treated yarn for an aramid cord, which has been treated with the first treating agent, though may be used as the aramid cord as it is, may be generally treated further with a second treating agent containing resorcinol, formalin and a latex. By undergoing the step (second treatment step) of treating with such a second treating agent, the adhesion force between the aramid cord and a power transmission belt body can be further enhanced.

The second treating agent (unvulcanized rubber composition or an RFL solution) contains resorcinol (R), formaldehyde (F) and a rubber or latex (L). Therein, resorcinol (R) and formaldehyde (F) may be contained in the form of a condensation product thereof (an RF condensate).

The RF condensate is not particularly limited, and it may be exemplified the novolac type, the resol type and combinations of these types. The RF condensate is preferably a resol type one in viewpoint of high concentration of methylol groups and excellent reactivity with epoxy compounds.

The RF condensate may be, for example, a reaction product (e.g. an initial condensate or a prepolymer) obtained by reacting resorcinol with formaldehyde in the presence of water and a base catalyst (e.g. an alkali metal salt such as sodium hydroxide, an alkaline earth metal salt, ammonia, etc.). Additionally, an aromatic mono-ol such as phenol or cresol, or an aromatic diol or polyol such as catechol or hydroquinone, may be used together with resorcinol so long as it does not impair the effects of the present invention. As the formaldehyde, use can be made of a formaldehyde condensate (e.g. trioxane, paraformaldehyde, etc.) or use can be made of an aqueous solution of formaldehyde (formalin, etc.).

The ratio (usage ratio) between resorcinol and formaldehyde, the former/latter (mole ratio), may be on the order of, for example, from 1/0.5 to 1/5, preferably from 1/0.6 to /4, and still preferably from 1/0.7 to 1/3. When an excess amount of formaldehyde is used over resorcinol, the resol type can be effectively obtained.

The rubber from which a latex is formed is not particularly limited so long as it can impart flexibility to an aramid cord, and examples thereof include diene rubbers (e.g., natural rubber, isoprene rubber, butadiene rubber, chloroprene rubber, styrene-butadiene rubber, vinylpyridine-styrene-butadiene copolymer rubber, acrylonitrile-butadiene rubber (nitrile rubber), hydrogenation products of these diene rubbers, etc.), olefin rubbers (e.g., ethylene-$\alpha$-olefin rubbers (ethylene-$\alpha$-olefin elastomers), polyoctenylene rubber, ethylenevinyl acetate copolymer rubber, chloroprene rubber, chlorosulfonated polyethylene rubber, alkylated chlorosulfonated polyethylene rubber, etc.), acrylic rubbers, silicone rubbers, urethane rubbers, epichlorohydrin rubbers, fluororubbers, combinations thereof, and the like.

As the rubber, use can be suitably made of the same or the same-type rubber as rubber in which the cord is to be embedded.

To 100 parts by mass RF condensate, the proportion of the latex, on a solid bases, can be selected from the range on the order of from 40 to 700 parts by mass, and may be on the order of, for example, from 45 to 600 parts by mass, preferably from 50 to 500 parts by mass, and still preferably from 55 to 400 parts by mass.

The second treating agent contains water in most cases. In addition, if necessary, the second treating agent may contain additives which will be exemplified in a section of the third treating agent (e.g. a vulcanizing agent, a vulcanization accelerator, a co-vulcanizing agent, an adhesiveness improving agent, a filler, an anti-aging agent, a lubricant, etc.).

The total solid concentration in the second treating agent (the concentration obtained by dividing the sum total of the mass of solids in the RF condensate and the mass of solids in the latex by the mass of the treating agent) may be on the order of, for example, from 0.1 to 20 mass%, preferably from 0.5 to 15 mass% (e.g. from 1 to 11 mass%), and still preferably from 1.5 to 10 mass% (e.g. from 2 to 10 mass%). By setting in such a ratio, the amount of solids adhering to the first treated yarn for an aramid cord can be adjusted to an appropriate range, which makes it easy to improve properties of the aramid cord with efficiency.

The treatment method with the second treating agent is similar to the treatment method with the first treating agent.

The adhesion rate of the second treating agent adhered to the second treated yarn for an aramid cord which have undergone the treatment with the first treating agent and the second treating agent ((mass after treatment with the second treating agent - mass before treatment with the second treating agent)/mass after treatment with the second treating agent $\times$ 100) may be on the order of, for example, from 1 to 20 % by mass, preferably from 1.5 to 15 % by mass, and still preferably from 2 to 10 % by mass.

The ratio (mass ratio) between the adhesion amount of the first treating agent and the adhesion amount of the second treating agent on a solids basis, the former/latter, may be on the order of, for example, from 0.5/1 to 20/1, preferably from 0.6/1 to 10/1, and still preferably from 0.7/1 to 5/1 (e.g. from 0.8/1 to 2/1).

The average thickness of a coating formed by the second treating agent may be on the order of from 1 to 30 $\mu$m, preferably from 2 to 25 $\mu$m, and still preferably from 5 to 20 $\mu$m.

Third Treatment Step

The second treated yarn for an aramid cord, which has been treated with the second treating agent, may further be treated with a third treating agent containing a rubber (an unvulcanized rubber composition or rubber cement). By undergoing the step (third treatment step) of treating with such a third treating agent, the adhesion force between the aramid cord and a power transmission belt body can still further be enhanced.

The rubber can be chosen as appropriate depending on the type of the rubber incorporated into the second treating agent or the type of the rubber of the rubber layer in which the aramid cord is to be embedded in a power transmission belt, and examples thereof include rubbers exemplified in the section of the second treating agent, such as olefin rubbers (e.g. ethylene-$\alpha$-olefin elastomers (or ethylene-$\alpha$-olefin rubbers, ethylenepropylenediene rubber (EPDM), etc.), chlorosulfonated polyethylene rubber, alkylated chlorosulfonated polyethylene rubber, etc.), diene rubbers (e.g. chloroprene rubber, nitrile rubber, hydrogenated nitrile rubber, etc.) and the like. These rubbers can be used singly or in combination of two or more thereof.

As the rubber, use can be suitably made of the same or the same-type rubber as rubber in which the cord is to be embedded.

In addition to the rubber, the third treating agent may contain conventional additives as necessary, and examples thereof include a vulcanizing agent (or a crosslinking agent), a co-vulcanizing agent (or a co-crosslinking agent), a vulcanization accelerator (or a crosslinking assistant), a vulcanization retarder, an adhesion improver, a filler, an anti-aging agent, a tackifier, a stabilizer, a coupling agent, a plasticizer, a lubricant, a coloring agent, a solvent, and the like.

These additives can be used singly or in combination of two or more thereof. Of those additives, a vulcanizing agent, a co-vulcanizing agent, a vulcanization accelerator, an adhesion improver, a filler, an anti-aging agent, a lubricant, a solvent, and the like are prevalently used.

The vulcanizing agent can be classified as a sulfur-based vulcanizing agent or a non-sulfur-based vulcanizing agent. Examples of the sulfur-based vulcanizing agent include sulfur (e.g. powder sulfur, precipitated sulfur, colloidal sulfur, insoluble sulfur, highly dispersive sulfur, etc.), sulfur compounds (e.g. sulfur chlorides such as sulfur monochloride and sulfur dichloride, etc.) and the like.

Examples of the non-sulfur-based vulcanizing agent include organic peroxides (e.g., diacyl peroxides, peroxy esters, dialkyl peroxides (e.g. dicumyl peroxide, t-butyl cumyl peroxide, 1,1-dibutylperoxy-3,3,5-trimethylcyclohexane, 2,5-dimethyl-2,5-di(t-butylperoxy)hexane, 1,3-bis(t-butylperoxy-isopropyl)benzene, di-t-butyl peroxide, etc.), etc.), oximes (e.g., quinone dioxime, etc.), maleimides (e.g., bismaleimide, phenylmaleimide, N-N'-m-phenylene bismaleimide, etc.), allyl esters (e.g., DAF (diallyl fumarate), DAP (diallyl phthalate), TAC (triallyl cyanurate), TAIC (triallyl isocyanurate), TMAIC (trimethallyl isocyanurate), etc.), (meth)acrylates (e.g. alkyl(meth)acrylates such as methyl(meth)acrylate, alkanediol to tetraol di- to tetra(meth)acrylates such as ethylene glycol di(meth)acrylate, etc.), and the like.

The vulcanizing agents can be used singly or in combination of two or more thereof. The proportion of the vulcanizing agent may be on the order of, for example, 30 parts by mass or less, preferably from 0.01 to 20 parts by mass, and still preferably from 0.1 to 15 parts by mass (e.g. from 0.5 to 10 parts by mass), to 100 parts by mass of the rubber.

Examples of the co-vulcanizing agent include metal oxides such as zinc oxide, magnesium oxide, calcium oxide, barium oxide, iron oxide, copper oxide, titanium oxide, aluminum oxide, and the like. These co-vulcanizing agents can be use alone or in combination of two or more thereof. The proportion of the co-vulcanizing agent may be used in a proportion on the order of, for example, 30 parts by mass or less, preferably from 0.1 to 20 parts by mass, and still preferably from 0.5 to 15 parts by mass (e.g. from 1 to 10 parts by mass), to 100 parts by mass of the rubber.

Examples of the vulcanization accelerator include thiuram-type accelerators (e.g., tetramethylthiuram monosulfide (TMTM), tetramethylthiuram disulfide (TMTD), tetramethylthiuram disulfide (TETD), tetrabutylthiuram disulfide (TBTD), dipentamethylenethiuram tetrasulfide (DPTT), etc.), thiazole-type accelerators (e.g., 2-mercaptobenzothiazole and salts thereof, etc.), sulfeneamide-type accelerators (e.g., N-cyclohexyl-2-benzothiazylsulfeneamide, etc.), urea-type accelerators (e.g., ethylenethiourea, etc.), combinations thereof, and the like.

The proportion of the vulcanization accelerator may be on the order of, for example, 30 parts by mass or less, preferably from 0.1 to 20 parts by mass, and still preferably from 0.5 to 15 parts by mass (e.g. from 1 to 10 parts by mass), to 100 parts by mass of the rubber.

Examples of the adhesion improver include the RF condensates as recited in the section of the second treating agent, condensation products of melamines and aldehydes (e.g., melamine-formaldehyde condensate, hexaC$_{1-4}$alkoxymethylol melamine, etc.), epoxy compounds (e.g., alkane-triol to hexaol polyglycidyl ethers, polyC$_{2-4}$alkyleneglycol diglycidyl ethers, C$_{6-8}$polyalkane-triol to tetraol polyglycidyl ethers, etc.), isocyanate compounds (e.g., polymethylenepolyphenylene polyisocyanate), combinations thereof, and the like. Incidentally, as for the adhesion improver, commercially available adhesives, for example, "Chemilok 402", manufactured by LORD Corporation, may be used.

The proportion of the adhesion improver may be on the order of, for example, 50 parts by mass or less, preferably from 0.1 to 40 parts by mass, and still preferably from 0.5 to 30 parts by mass (e.g. from 1 to 20 parts by mass), to 100 parts by mass of the rubber.

Examples of the filler (including reinforcing agents) include organic or inorganic fillers such as powdery fillers (e.g., carbon black (e.g. furnace black such as SAF, ISAF, HAF, MAF, FEF, GPF, and SRF, etc.), silica (dry silica, wet silica), calcium carbonate, talc, etc.), fibrous fillers (e.g. short fibers such as polyamide fibers, glass fibers and carbon fibers, etc.), combinations thereof, and the like. Of these fillers, inorganic fillers (e.g. powdery fillers such as carbon black and silica) are prevalently used.

The proportion of the filler may be on the order of, for example, from 1 to 80 parts by mass, preferably from 5 to 70 parts by mass, and still preferably from 10 to 60 parts by mass, to 100 parts mass of the rubber.

Examples of the anti-aging agent include amine-type anti-aging agents (e.g., aromatic secondary amines (e.g. N-phenyl-1-naphthylamine, octylated diphenylamine, 4,4'-bis($\alpha$,$\alpha$-dimethylbenzyl)diphenylamine, N,N'-diphenyl-p-phenylendiamine, N,N'-dinaphthyl-p-phenylenediamine, etc.), ketone-amine reaction products (e.g. 2,2,4-trimethyl-1,2-dihydroquinoline polymers, condensates of acetone and diphenylamine, condensates of acetone and N-phenyl-2-naphthylamine, etc.), etc.), phenol-type anti-aging agents (e.g., monophenols (e.g. 2,6-di-t-butyl-4-methylphenol, etc.), bisphenols (e.g. 2,2'-methylenebis(4-methyl-6-t-butylphenol)), etc.), combinations thereof, and the like.

The proportion of the anti-aging agent may be on the order of, for example, 30 parts by mass or less, preferably from 0.1 to 20 parts by mass, and still preferably from 0.5 to 15 parts by mass (e.g. from 1 to 10 parts by mass), to 100 parts by mass of the rubber.

Examples of the lubricant include saturated higher fatty acids or salts thereof (e.g., stearic acid, metal stearates, etc.), wax, paraffin, combinations thereof, and the like. The proportion of the lubricant may be on the order of, for example, 30 parts by mass or less, preferably from 0.1 to 20 parts by mass, and still preferably from 0.5 to 15 parts by mass (e.g. from 1 to 10 parts by mass), to 100 parts by mass of the rubber.

Examples of the solvent include hydrocarbons (e.g. aromatic hydrocarbons such as toluene and xylene), halogenated hydrocarbons (e.g. haloalkanes such as methylene chloride and chloroform), alcohols (e.g. alkanols such as ethanol, propanol and isopropanol), ethers (e.g. cyclic ethers such as dioxane and tetrahydrofuran), esters (e.g., ethyl acetate), ketones (e.g. chain-type ketones such as acetone and methyl ethyl ketone, cyclic ketones such as cyclohexanone), cellosolves, carbitols, and the like. These solvents may be used singly or as a mixed solvent.

The proportion of the solvent may be on the order of, for example, from 0.5 to 50 parts by mass and preferably from 1 to 20 parts by mass, to 1 parts by mass of rubber.

As a representative example of the third treating agent, there may be mentioned a rubber cement prepared by dissolving in a solvent a composition containing a rubber, an RF condensate and additives (e.g., a vulcanizing agent, a co-vulcanizing agent, a vulcanization accelerator, an adhesion improver, a filler, an anti-aging agent and a lubricant). The rubber concentration in the rubber cement is not particularly limited, and it may be on the order of, for example, from 1 to 20 mass%, preferably from 2 to 15 mass%, and still preferably from 3 to 10 mass%.

The adhesion rate of the third treating agent adhered to the third treated yarn for an aramid cord which have undergone the treatment with the first treating agent, the second treating agent and the third treating agent ((mass after treatment with the third treating agent - mass before treatment with the third treating agent)/mass after treatment with the third treating agent $\times$ 100) may be on the order of, for example, from 1 to 20 % by mass, and preferably from 5 to 15 % by mass.

The average thickness of a coating formed by the third treating agent is not particularly limited, and it may be on the order of, for example, from 1 to 20 $\mu$m, and preferably from 5 to 15 $\mu$m.

<Aramid Cord>

The aramid cord according to the present invention is suitable for use in a power transmission belt, and generally utilized in a state of being embedded in the rubber layer of a power transmission belt. The rubber layer can be chosen as appropriate depending on, for example, usage of the power transmission belt. In a wrapped V-belt, for example, the aramid cord may be embedded in a rubber layer formed from a rubber (or a rubber composition), such as diene rubbers (natural rubber, styrene-butadiene rubber, chloroprene rubber, etc.), olefin rubbers (EPDM, etc.).

The aramid cord for use in a power transmission belt may be the aramid cord obtained by the manufacturing method as mentioned above. That is, the aramid cord for use in a power transmission belt may be an aramid-type multifilament yarn (e.g. twisted yarn) treated (e.g. coated or impregnated) with the first treating agent (further, if necessary, with the second treating agent, or with the second treating agent and the third treating agent). Alternatively, the aramid cord for use in a power transmission belt may be an aramid-type multifilament yarn vulcanized after treated (coated or impregnated) with the first treating agent (further, if necessary, with the second treating agent, or with the second treating agent and the third treating agent).

The average diameter of the aramid cord may be on the order of, for example, from 0.3 to 3.6 mm, preferably from 0.5 to 3.1 mm and still preferably from 0.6 to 2.7 mm.

(Power Transmission Belt)

It is essential only that the power transmission belt contain the aramid cord as mentioned above. In many cases, the power transmission belt usually contains a rubber layer in which an aramid cord (particularly, a plurality of aramid cords) is embedded in the longitudinal direction (or the peripheral direction) of the belt. The spacing between adjacent cords (spinning pitch) may be on the order of, for example, from 0.5 to 4 mm, preferably from 0.6 to 2.5 mm, and still preferably from 0.7 to 2.3 mm.

It is essential only that the power transmission belt contain a rubber layer in which the aramid cord is embedded in the longitudinal direction of the belt, and typically, it may be a power transmission belt containing an adhesion rubber layer and a compression rubber layer provided on one surface of the adhesion rubber layer, in which the aramid cord is embedded in the adhesion rubber layer. Incidentally, a tension rubber layer may be provided on the other surface of the adhesion rubber layer. In addition, the power transmission belt may be covered (or laminated) with reinforcing cloth over all or part (e.g. the surface of the tension rubber layer and/or the compression rubber layer) of the belt body formed of rubber layers.

Examples of such a power transmission belt include V-belts such as a wrapped V-belt and a raw-edge V-belt, a V-ribbed belt, a flat belt, a toothed belt, and the like.

Because the power transmission belt of the present invention, in particular is, as mentioned above, capable of being inhibited or prevented from fraying out even when the rubber is cut in an unvulcanized state, it may be a power transmission belt like a wrapped V belt, which is manufactured via a step of cutting its rubber layer in an unvulcanized state.

The wrapped V belt is a belt obtained usually through a step (cutting step) of cutting (slicing) an unvulcanized rubber layer (a belt sleeve) in which an aramid cord is embedded, into pieces of a predetermined width, a step (skiving step) of cutting off edges of lower both ends of the cut belt, a step (covering step) of winding canvas around all the periphery of the belt after the skiving step, and a step of vulcanizing the belt having undergone the covering step by applications of heat and pressure, and therein is also included a wrapped cogged V-belt having a cogged part on the internal circumferential side of the belt.

The unvulcanized rubber layer in which a cord is embedded can be obtained by, for example, stacking a compression rubber layer, an adhesion rubber layer, aramid cord(s), and a tension rubber layer in this order.

The power transmission belt of the present invention may also be a raw-edge V-belt having exposed a compression rubber layer on both side surfaces (frictional power transmission surfaces) of the belt. The raw-edge V belt is a belt formed usually by stacking, from the bottom surface (internal circumferential face) to the top surface of the belt, a lower reinforcing cloth, a compression rubber layer, an adhesion rubber layer in which cord(s) is(are) embedded in the longitudinal direction of the belt, and an upper reinforcing cloth in this order, and therein are also included a raw-edge cogged V-belt having cogged portions on the internal circumferential side of the belt and a raw-edge double-cogged V-belt having cogged portions on both the internal and external circumferential sides, for ease of bending the belt.

EXAMPLES

The present invention will be explained in more detail on the basis of the following Examples. However, the present invention should not be construed as being limited to these Examples in any way.

(Ingredients)

Rubber-modified epoxy resin: NBR-modified epoxy resin, "EPR-4030", manufactured by ADEKA CORPORATION
Aromatic epoxy resin 1 (rubber-unmodified): Bisphenol A-type epoxy resin, "JER828", manufactured by Mitsubishi Chemical Corporation
Aromatic epoxy resin 2 (rubber-unmodified): Bisphenol F-type epoxy resin, "EP-4901", manufactured by ADEKA CORPORATION
Reactive diluent: 1,6-Hexanediol diglycidyl ether
Curing agent: 2,4,6-Tris(dimethylaminomethyl)phenol, "Daitocurar HD-Acc43", manufactured by DAITO SANGYO CO., LTD.
Short fiber: Aramid short fibers, "Twaron®", manufactured by Teijin Limited, cut yarns, average fiber length: 3 mm, average fiber length: 12 $\mu$m
Silica: "Nipsil VN3", manufactured by Tosoh Silica Corporation
Carbon black: "Seast 3", manufactured by Tokai Carbon Co., Ltd.
Naphthenic oil: "RS700", manufactured by DIC Corporation
Anti-aging agent: "NONFLEX OD3", manufactured by Seiko Chemical Co., Ltd.
Vulcanization accelerator: Tetramethylthiuram disulfide (TMTD)
Copolymer of resorcinol and formalin (resorcinol resin): Resorcinol-formaldehyde copolymer having a resorcinol content of 20% or less and a formaldehyde content of 0.1% or less

(Preparation of Aramid Fiber Cord)

Two pieces of non-twisted aramid fiber filaments (referred to as aramid-fiber single yarns) made up of 1670 dtex (the number of filaments: 1,000) of aramid fibers ("Technora®, registered trademark", manufactured by Teijin Limited) which were arranged in parallel into the form of a ribbon without twisting were subjected to a primary twisting (S-twisting) with the primary twist number of 10.5 turns/10 cm and the twist factor of 1.9, and three pieces of this primary-twisted yarns were tied and subjected to a final twisting (Z-twisting) in the counter direction to the primary twisting with the final twist number of 10.6 turns/10 cm and the twist factor of 3.5, thereby preparing an aramid fiber cord.

(Treating Solution)

(First Treating Solution)

The ingredients shown in Table 1 were mixed into toluene, and stirred for 10 minutes at room temperature, thereby preparing a variety of first treating solutions (pretreating solutions) A to I.

[Table 1]

| First treating solution | A | B | C | D | E | F | G | H | I |
|---|---|---|---|---|---|---|---|---|---|
| Rubber-modified epoxy resin (parts by mass) | 100 | 30 | 15 | 25 | 5 | 30 | 30 | 0 | 0 |
| Aromatic epoxy resin 1 (parts by mass) | 0 | 55 | 25 | 10 | 35 | 30 | 0 | 50 | 0 |
| Aromatic epoxy resin 2 (parts by mass) | 0 | 0 | 60 | 60 | 60 | 40 | 55 | 50 | 100 |
| Reactive diluent (parts by mass) | 0 | 15 | 0 | 5 | 0 | 0 | 15 | 0 | 0 |
| Curing agent (parts by mass) | 10 | 10 | 10 | 10 | 10 | 10 | 10 | 10 | 10 |

(Second Treating Solution)

By mixing 2.6 parts by mass of resorcinol, 1.4 parts by weight of 37% formalin, 17.2 parts by mass of vinylpyridine-styrene-butadiene copolymer latex (manufactured by ZEON CORPORATION), and 78.8 parts by mass of water by stirring for 10 minutes at room temperature, a second treating solution (RFL solution) was prepared.

(Third Treating Solution)

A third treating solution (rubber cement) was prepared by dissolving the rubber composition shown in Table 2 mentioned later in toluene in a solid concentration of 10%.

(Peel Testing)

On the unvulcanized rubber sheet (thickness: 4 mm) formed from the rubber composition shown in Table 2 mentioned later, a plurality of aramid cords were arranged in parallel so as to have a width of 25 mm (fiber spacing: 0.1 mm), and thereto a pressure of 2.0 MPa was applied by means of a press plate and subjected to a vulcanization at 160°C for 30 minutes, thereby prepare a rectangular sample (width: 25 mm, length: 150 mm, thickness: 4 mm) for peel testing. Peel testing was performed at a tension rate of 50 mm/min in accordance with JISK 6256 (1999), and an adhesion force between the cord and the adhesion rubber (vulcanized adhesion force) was measured under room temperature atmosphere.

(Fray Testing)

In order to evaluate the fraying property of an aramid cord, a flat belt was prepared in the following manner. To begin with, a rubber sheet as a laminate of a sheet for an unvulcanized adhesion rubber layer having a thickness of 0.5 mm and formed from the rubber composition shown in Table 2 and a sheet for an unvulcanized compression rubber layer having a thickness of 4 mm and formed from the rubber composition shown in Table 3 was wound onto a mantle so that the sheet for the compression rubber layer was placed on the underside. Then, the aramid cord was coiled around the sheet for the adhesion rubber layer while subjected to spinning, and further thereon was wound a sheet for an unvulcanized tension rubber layer having a thickness of 2 mm and formed from the rubber composition shown in Table 3, in this order.

The thus obtained belt sleeve was cut in the circumferential direction into individual flat belts (wrapped V belts in process) with a width of 16.5 mm, and they were removed from the mantle and used as samples.

[Table 2]

| Rubber Composition for Adhesion Rubber Layer | |
|---|---|
| Ingredient | parts by weight |
| Chloroprene rubber | 100 |
| Naphthenic oil | 5 |
| Magnesium oxide | 4 |
| Silica | 20 |
| Carbon black | 30 |

(continued)

| Rubber Composition for Adhesion Rubber Layer | |
|---|---|
| Ingredient | parts by weight |
| Resorcinol-formaldehyde copolymer | 1.5 |
| Anti-aging agent | 4 |
| Zinc oxide | 5 |
| Vulcanization accelerator (TMTD) | 1 |
| N,N'-m-phenylenedimaleimide | 5 |
| Stearic acid | 2 |
| Hexamethoxymethylolmelamine | 3.5 |

[Table 3]

| Rubber Composition for Compression Rubber Layer and Tension Rubber Layer | |
|---|---|
| Ingredient | parts by weight |
| Chloroprene rubber | 100 |
| Aramid short fiber | 25 |
| Naphthenic oil | 5 |
| Magnesium oxide | 4 |
| Carbon black | 30 |
| Anti-aging agent | 4 |
| Zinc oxide | 5 |
| N,N'-m-phenylenedimaleimide | 8 |
| Sulfur | 0.5 |

The flat belts prepared in the foregoing manner were evaluated in a frayed state of aramid cords on the side surfaces of the belt on a basis of the following criteria. The estimation rated as S or A is regarded as satisfactory.
S: At the time of cutting a belt, the belt develops no frays at the end face and no frays are formed by rubbing the end face.
A: At the time of cutting a belt, the belt develops no frays at the end face and, even by strongly rubbing the end face, the belt is frayed out only at several spots.
B: At the time of cutting a belt, the belt develops no frays at the end face, but the belt is frayed out even by moderately rubbing the end face, and that in a plurality of spots by strong rubbing.
C: At the time of cutting a belt, the belt is frayed out at the end face.

(Bending Fatigue Testing)

Specimens for bending fatigue testing were prepared in the following manner. First, an unvulcanized rubber sheet (thickness: 0.5 mm) of the composition shown in Table 2 was wound around a cylindrical mold, then an aramid cord was coiled in a spiral thereon, and further another unvulcanized rubber sheet (thickness: 0.5 mm) of the composition shown in Table 2 was wound thereon. The rubber sheet thus obtained was covered with a jacket, and vulcanized by applying heat thereto, thereby preparing a vulcanized rubber sleeve. The vulcanized rubber sleeve was cut in the circumferential direction by means of a cutter to provide a specimen 21 with a width of 3 mm, a length of 50 cm, and a thickness of 1.5 mm so that two aramid cords were embedded therein and the aramid cords were not exposed at the cut side surfaces.

In the bending fatigue testing, as illustrated in FIG. 1, the specimen 21 prepared in the foregoing manner was bent and wound around a pair of columnar rotating bars (diameter: 30 mm) 22a and 22b arranged in upper and lower positions, respectively; one end of the specimen 21 was fixed to a flame 23, and on the other end of the specimen 21 was imposed 2 kg of a load 24; 300,000 reciprocating motions in the vertical direction (stroke: 100 mm, cycle: 100 times/min) were given to the one pair of rotating bars 22a and 22b while keeping the relative distance therebetween constant, thereby repeatedly winding and rewinding the specimen 21 on the rotating bars 22a and 22b to result in the creation of bending fatigue. The specimen having undergone the bending was pulled at a tension rate of 50 mm/min by means of an Autograph ("AGS-J10kN", manufactured by Shimadzu Corporation), thereby measuring the strength at beak of the specimen. On the other hand, the strength of the specimen before bending had been previously measured, and a strength retention rate was calculated on the basis of the following expression.

$$\text{Strength retention rate (\%)} = (\text{Strength after bending/strength before bending}) \times 100$$

Examples 1 to 4, Reference Examples 1 and 2, and Comparative Examples 1 to 3

The aramid fiber cord (twisted yarn) was passed through each of the various first treating solutions shown in Table 1 (each of A to I) for 10 seconds to undergo dip treatment, and then subjected to dry treatment at 180°C for 4 minutes.
The aramid fiber cord thus treated with each of the first treating solutions was subjected to dip treatment with the second treating solution and subjected to dry treatment. Dipping and drying conditions were the same as those for the first treating solution.
Each of the aramid fiber cords thus treated with the second treating solution was passed through the third treating solution for 3 seconds to undergo dip treatment, and then subjected to dry treatment at 170°C for 1.5 minutes, thereby providing aramid cords.
Each of the thus prepared aramid cords was subjected to the peel testing, bending fatigue testing and fray testing. Results obtained are shown in Table 4.

[Table 4]

| | Comparative Example | | | Reference Example | | Example | | | |
|---|---|---|---|---|---|---|---|---|---|
| | 1 | 2 | 3 | 1 | 2 | 1 | 2 | 3 | 4 |
| Form of fibers to which first treating solution adhered | twisted yarn | twisted yarn | twisted yarn | twisted yarn | twisted yarn | twisted yarn | twisted yarn | twisted yarn | twisted yarn |
| First treating solution | A | H | I | B | G | C | D | E | F |
| Peel strength (N/ 25 mm) | 150 | 350 | 350 | 220 | 300 | 350 | 300 | 310 | 300 |
| Strength retention rate (%) | 50 | 40 | 35 | 50 | 50 | 55 | 55 | 54 | 55 |
| Fray testing | B | B | C | A | A | S | S | S | S |

As can be seen from the results shown in Table 4, the combined use of a rubber-modified epoxy resin and an aromatic epoxy resin in the first treating solution allowed for enhancement of peel strength without reduction in bending fatigue resistance.
Moreover, fray in the unvulcanized state could be effectively prevented. This result revealed that fray can be prevented in the manufacture of the belts like a wrapped V-belt, which requires cutting, skiving and covering steps in an unvulcanized state.
These effects were found to be still more remarkable in the cases where at least bisphenol F-type epoxy resin (particularly both bisphenol A-type epoxy resin and bisphenol F-type epoxy resin) was used in the first treating solution.
Examples 5 to 8, Reference Examples 3 and 4, and Comparative Examples 4 to 6
At the preparing of aramid fiber cords, aramid-fiber single yarns (raw yarns) before primary twisting were

## EP 3 015 597 B1

subjected to dipping treatment with each of the various first treating solutions and then to drying treatment in the same manners as in Example 1.

Two pieces of the aramid-fiber single yarns thus obtained (bundle of aramid fiber filaments arranged in parallel in the form of a ribbon without twisting) were subjected to a primary twisting (S-twisting) with the primary twist number of 10.5 turns/10 cm, and three pieces of this primary-twisted yarns were tied and to a final twisting (Z-twisting) in the counter direction to the primary twisting with the final twist number of 10.6 turns/10 cm, thereby preparing an aramid fiber cord.

Further, each of these aramid fiber cords was subjected to the treatment with the second treating solution and the third treating solution in the same manners as in Example 1, thereby providing aramid cords.

Each of the thus obtained aramid cords was subjected to the peel testing, bending fatigue testing and fray testing. Results obtained are shown in Table 5.

[Table 5]

|  | Comparative Example | | | Reference Examples | | Example | | | |
|---|---|---|---|---|---|---|---|---|---|
|  | 4 | 5 | 6 | 3 | 4 | 5 | 6 | 7 | 8 |
| Form of fibers to which first treating solution adhered | raw yarn | raw yarn | raw yarn | raw yarn | raw yarn | raw yarn | raw yarn | raw yarn | raw yarn |
| First treating solution | A | H | I | B | G | C | D | E | F |
| Peel strength (N/25 mm) | 160 | 370 | 365 | 250 | 300 | 350 | 300 | 320 | 315 |
| Strength retention rate (%) | 45 | 35 | 32 | 48 | 48 | 55 | 54 | 51 | 52 |
| Fray testing | A | A | A | A | A | S | S | S | S |

As can be seen from the results shown in Table 5, as compared with the cases of applying to the twisted yarn (Table 4), Examples 5 to 8 were equal in terms of peel strength and fraying property, but slightly inferior in strength retention rate determined in the bending fatigue testing because the cords were rendered rigid and lowered in flexibility when the twisted yarn is prepared after the treating agent is adhered to the respective raw yarn.

In Comparative Examples 4 to 6, because the raw yarns were treated with the first treating agents to result in convergence of filaments, fray resistance was good. However, Comparative Example 4 using only the rubber-modified epoxy resin in the first treating agent was low in peel strength; while Comparative Examples 5 and 6 using only the aromatic epoxy resin, though satisfactory in peel strength, were reduced in strength retention rate because the treating agents formed hard coatings, and thus the cords were rendered rigid to result in reduction of flexibility.

While the present invention has been described in detail with reference to the specified embodiments thereof, it will be apparent to persons skilled in the art that various changes and modifications can be made without departing from the scope of the present invention.

The present application is based on Japanese Patent Application No. 2013-134663 filed on June 27, 2013 and Japanese Patent Application N. 2014-116729 filed on June 5, 2014.

INDUSTRIAL APPLICABILITY

The aramid cord of the present invention is suitable for the use in power transmission belts (e.g., V-belts such as a wrapped V-belt and a raw-edge V-belt, frictional power transmission belts such as a V-ribbed belt and a flat belt, and meshing power transmission belts such as a toothed belt and a double-sided toothed belt). The aramid cord of the present invention is excellent for the use in wrapped V-belts in particular because it can inhibit or prevent the fray at a high level even when it is cut in an unvulcanized state. Such wrapped V-belts are prevalently used in agricultural machines and the like. Raw-edge V-belts, raw-edge cogged V-belts and raw-edge double-cogged V-belts are prevalently used in agricultural machines or in belts (transmission belts) used in transmissions in which speed ratios are varied in non-stepwise manner during the belt running, such as motorcycles, ATV (All-Terrain Vehicle) and snow mobiles, and the like.

DESCRIPTIONS OF REFERENCE NUMERAL AND SIGNS

| 21 | Specimen |
|---|---|
| 22a, 22b | Rotating bar |
| 23 | Frame |
| 24 | Load |

**Claims**

1. A manufacturing method of an aramid cord, comprising at least a first treatment step of treating an untreated yarn for the aramid cord with a first treating agent comprising a rubber-modified epoxy resin and a rubber-unmodified epoxy resin,
   wherein the rubber-modified epoxy resin comprises a nitrile rubber-modified bisphenol-type epoxy resin, and the rubber-unmodified epoxy resin comprises a bisphenol F-type epoxy resin and a bisphenol A-type epoxy resin.

2. The manufacturing method according to claim 1, wherein a ratio between the any of the bisphenol-type epoxy resins containing bis(hydroxyphenyl)methanes as bisphenols and the other bisphenol-type epoxy resin, a former/latter (mass ratio), is from 95/5 to 10/90.

3. The manufacturing method according to claim 1 or 2, wherein a ratio between the rubber-modified epoxy resin and the rubber-unmodified epoxy resin, a former/latter (mass ratio), is from 50/50 to 1/99.

4. The manufacturing method according to any one of claims 1 to 3, further comprising a second treatment step of treating the first treated yarn for the aramid cord treated with the first treating agent, with a second treating agent containing resorcinol, formalin and a latex.

5. The manufacturing method according to claim 4, further comprising a third treatment step of treating the second treated yarns for the aramid cord having undergone treatment in the second treatment step, with a third treating agent containing a rubber.

6. The manufacturing method according to any one of claims 1 to 5, wherein the untreated yarn for the aramid cord is twisted yarn.

7. An aramid cord obtained by the method as described in any one of claims 1 to 6.

8. A power transmission belt provided with a rubber layer in which the aramid cord as described in claim 7 is embedded along the lengthwise direction of the belt.

9. The power transmission belt according to claim 8, which is a wrapped V-belt.

10. A treating agent for treating an untreated yarn for an aramid cord to be used in a power transmission belt, comprising a rubber-modified epoxy resin and a rubber unmodified aromatic epoxy resin, wherein the rubber-modified epoxy resin comprises a nitrile rubber-modified bisphenol-type epoxy resin, and the rubber-unmodified epoxy resin comprises a bisphenol F-type epoxy resin and a bisphenol A-type epoxy resin.

**Patentansprüche**

1. Herstellungsverfahren für einen Aramidkord, umfassend mindestens einen ersten Behandlungsschritt des Behandelns eines unbehandelten Garns für den Aramidkord mit einem ersten Behandlungsmittel, das ein Kautschuk-modifiziertes Epoxidharz und ein Kautschuk-unmodifiziertes Epoxidharz umfasst,
   worin das Kautschuk-modifizierte Epoxidharz ein mit Nitrilkautschuk modifiziertes Epoxidharz vom Bisphenol-Typ umfasst und das Kautschuk-unmodifizierte Epoxidharz ein Epoxidharz vom Bisphenol-F-Typ und ein Epoxidharz vom Bisphenol-A-Typ umfasst.

2. Herstellungsverfahren gemäß Anspruch 1, worin ein Verhältnis zwischen irgendeinem der Epoxidharze vom Bisphenol-Typ, das Bis(hydroxyphenyl)methane als Bisphenole enthält, und dem anderen Epoxidharz vom Bisphenol-Typ, von Ersterem/Letzterem (Massenverhältnis), 95/5 bis 10/90 beträgt.

**3.** Herstellungsverfahren gemäß Anspruch 1 oder 2, worin ein Verhältnis zwischen dem Kautschuk-modifizierten Epoxidharz und dem Kautschuk-unmodifizierten Epoxidharz, von Ersterem/Letzterem (Massenverhältnis), 50/50 bis 1/99 beträgt.

**4.** Herstellungsverfahren gemäß mindestens einem der Ansprüche 1 bis 3, ferner umfassend einen zweiten Behandlungsschritt des Behandelns des ersten behandelten Garns für den mit dem ersten Behandlungsmittel behandelten Aramidkord mit einem zweiten Behandlungsmittel, welches Resorcin, Formalin und einen Latex enthält.

**5.** Herstellungsverfahren gemäß Anspruch 4, ferner umfassend einen dritten Behandlungsschritt des Behandelns der zweiten behandelten Garne für den Aramidkord, die im zweiten Behandlungsschritt einer Behandlung unterzogen wurden, mit einem dritten Behandlungsmittel, welches einen Kautschuk enthält.

**6.** Herstellungsverfahren gemäß mindestens einem der Ansprüche 1 bis 5, worin das unbehandelte Garn für den Aramidkord Zwirn ist.

**7.** Aramidkord, erhalten durch das Verfahren gemäß mindestens einem der Ansprüche 1 bis 6.

**8.** Kraftübertragungsriemen, der mit einer Gummischicht versehen ist, in welcher der wie in Anspruch 7 beschriebene Aramidkord entlang der Längsrichtung des Riemens eingebettet ist.

**9.** Kraftübertragungsriemen gemäß Anspruch 8, der ein gewickelter Keilriemen ist.

**10.** Behandlungsmittel zum Behandeln eines unbehandelten Garns für einen in einem Kraftübertragungsriemen zu verwendenden Aramidkord, umfassend ein Kautschuk-modifiziertes Epoxidharz und ein Kautschuk-unmodifiziertes aromatisches Epoxidharz, worin das Kautschuk-modifizierte Epoxidharz ein Nitrilkautschuk-modifiziertes Epoxidharz vom Bisphenol-Typ umfasst und das Kautschuk-unmodifizierte Epoxidharz ein Epoxidharz vom Bisphenol-F-Typ und ein Epoxidharz vom Bisphenol-A-Typ umfasst.

**Revendications**

**1.** Procédé de fabrication d'un fil câblé d'aramide, comprenant au moins une première étape de traitement consistant à traiter un fil non traité pour le fil câblé d'aramide avec un premier agent de traitement comprenant une résine époxy modifiée au caoutchouc et une résine époxy non modifiée au caoutchouc,
dans lequel la résine époxy modifiée au caoutchouc comprend une résine époxy de type bisphénol modifiée au caoutchouc nitrile, et la résine époxy non modifiée au caoutchouc comprend une résine époxy de type bisphénol F et une résine époxy de type bisphénol A.

**2.** Procédé de fabrication selon la revendication 1, dans lequel un rapport entre n'importe laquelle des résines époxy de type bisphénol contenant des bis(hydroxyphényl)méthanes comme des bisphénols et l'autre résine époxy de type bisphénol, un premier/dernier (rapport de masse), va de 95/5 à 10/90.

**3.** Procédé de fabrication selon la revendication 1 ou 2, dans lequel un rapport entre la résine époxy modifiée au caoutchouc et la résine époxy non modifiée au caoutchouc, un premier/dernier (rapport de masse), va de 50/50 à 1/99.

**4.** Procédé de fabrication selon l'une quelconque des revendications 1 à 3, comprenant en outre une deuxième étape de traitement consistant à traiter le premier fil traité pour le fil câblé d'aramide traité avec le premier agent de traitement, avec un deuxième agent de traitement contenant du résorcinol, du formol et un latex.

**5.** Procédé de fabrication selon la revendication 4, comprenant en outre une troisième étape de traitement consistant à traiter les seconds fils traités pour le fil câblé d'aramide ayant subi le traitement dans la deuxième étape de traitement, avec un troisième agent de traitement contenant un caoutchouc.

**6.** Procédé de fabrication selon l'une quelconque des revendications 1 à 5, dans lequel le fil non traité pour le fil câblé d'aramide est un fil torsadé.

**7.** Fil câblé d'aramide obtenu par le procédé tel que décrit selon l'une quelconque des revendications 1 à 6.

8. Courroie de transmission de puissance munie d'une couche de caoutchouc dans laquelle le fil câblé d'aramide tel que décrit dans la revendication 7 est incorporé le long de la direction de la longueur de la courroie.

9. Courroie de transmission de puissance selon la revendication 8, qui est une courroie enrobée en V.

10. Agent de traitement pour traiter un fil non traité pour un fil câblé d'aramide à utiliser dans une courroie de transmission de puissance, comprenant une résine époxy modifiée au caoutchouc et une résine époxy aromatique non modifiée au caoutchouc, dans lequel la résine époxy modifiée au caoutchouc comprend une résine époxyde de type bisphénol modifiée au caoutchouc nitrile, et la résine époxy non modifiée au caoutchouc comprend une résine époxy de type bisphénol F et une résine époxy de type bisphénol A.

[FIG. 1]

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3759857 B
- JP H1135702 A
- US 2006147711 A1
- JP 2013134663 A
- JP 2014116729 A